(19) Europäisches Patentamt
European Patent Office
Office européen des brevets

(11) **EP 4 345 673 A1**

(12) **EUROPEAN PATENT APPLICATION**

(43) Date of publication:
**03.04.2024 Bulletin 2024/14**

(21) Application number: **22306451.0**

(22) Date of filing: **29.09.2022**

(51) International Patent Classification (IPC):
**G06F 30/17** $^{(2020.01)}$ **G06F 30/20** $^{(2020.01)}$
**G06F 111/04** $^{(2020.01)}$

(52) Cooperative Patent Classification (CPC):
**G06F 30/17; G06F 30/20;** G06F 2111/04

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Dassault Systèmes
78140 Vélizy-Villacoublay (FR)**

(72) Inventors:
• **BRIFAULT, Lucas
Vélizy-Villacoublay (FR)**
• **MEHR, Eloi
Vélizy-Villacoublay (FR)**

(74) Representative: **Bandpay & Greuter
11 rue Christophe Colomb
75008 Paris (FR)**

(54) **FILLET DETECTION METHOD**

(57) The disclosure notably relates to a computer-implemented method comprising providing a mesh representing a segment of an outer surface of a portion of a mechanical part. The method further comprises determining curves over the mesh that each follows maximal curvature directions of the mesh, fitting each curve with a respective circle, thereby obtaining a set of circles, and calculating a value of one or more statistics of the set of circles. The method then detects whether the mesh is a fillet or not as a function of the value of the one or more statistics.

FIG. 4

## Description

### TECHNICAL FIELD

The disclosure relates to the field of computer programs and systems, and more specifically to a method, system and program for detecting a fillet in a provided mesh.

### BACKGROUND

A number of solutions, hardware and software, are offered on the market for the design, the engineering and the manufacturing of objects. CAD is an acronym for Computer-Aided Design, e.g., it relates to software solutions for designing an object. CAE is an acronym for Computer-Aided Engineering, e.g., it relates to software solutions for analysing and simulating the physical behavior of a future product. CAM is an acronym for Computer-Aided Manufacturing, e.g., it relates to software solutions for defining product manufacturing processes and resources. In such computer-aided design solutions, the graphical user interface plays an important role as regards the efficiency of the technique. These techniques may be embedded within Product Lifecycle Management (PLM) solutions. PLM refers to an engineering strategy that helps companies to share product data, apply common processes, and leverage corporate knowledge for the development of products from conception to the end of their life, across the concept of extended enterprise. The PLM solutions provided by Dassault Systèmes (under the trademarks CATIA, SIMULIA, DELMIA and ENOVIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the solutions deliver common models linking products, processes, resources to enable dynamic, knowledge-based product creation and decision support that drives optimized product definition, manufacturing preparation, production and service.

Some of these systems and programs provide functionalities for processing CAD models of mechanical products. Specifically, some of the provided functionalities are directed to (automatic) detection of CAD features, for example fillet features in provided meshes.

Document Di Angelo et al., "Fillets, rounds, grooves and sharp edges segmentation from 3D scanned surfaces." Computer-Aided Design 110 (2019): 78-91 discloses a method to segment secondary features of tessellated geometric models. The method is based on an analysis of geometric-differential properties and provides specific strategies that reduce its sensitivity to uncertainties without affecting its selectivity.

Within this context, there is still a need for an improved solution for processing CAD models of mechanical products and detecting fillets.

### SUMMARY

It is therefore provided a computer-implemented method comprising providing a mesh representing a segment of an outer surface of a portion of a mechanical part. The method further comprises determining curves over the mesh that each follows maximal curvature directions of the mesh, fitting each curve with a respective circle, thereby obtaining a set of circles, and calculating a value of one or more statistics of the set of circles. The method further comprises detecting whether the mesh is a fillet or not as a function of the value of the one or more statistics.

The method may comprise one or more of the following:

- the determining of the curves comprises computing a distribution of maximal curvature directions over the mesh, and starting from a plurality of seed points belonging to the mesh, tracing integral curves of the distribution of maximal curvature directions;
- the computing of a distribution of maximal curvature directions comprises computing a curvature tensor field distributed over the mesh, decomposing the computed tensor field into at least two sub-tensors, a first sub-tensor corresponding to a maximal curvature, and a second sub-tensor corresponding to a minimal curvature, and computing the distribution of maximal curvature directions based on the decomposed tensor field;
- the computing of the curvature tensor field is performed according to a normal cycles approach, a quadric fitting approach, or a circle fitting approach;
- the mesh has faces and edges, and the distribution of maximal curvature directions comprises, for each face, one or more respective maximal curvature directions, wherein the tracing of each integral curve comprises, starting from a respective seed point, iteratively face-by-face, integrating a planar curve on each respective face based on the one or more respective maximal curvature directions, each iteration stopping once the integrating reaches an edge of the respective face;
- the one or more maximal curvature directions of each respective face consist of a single maximal curvature direction which is constant for the face, the integrating of each planar curve on a respective face being based on said constant maximal curvature direction, the planar curve thereby being a straight line;

- the one or more statistics comprise one or both of a mean fitting error, the mesh being detected as a fillet if, and only if, the mean fitting error is below a first threshold, and a radius variance, the mesh being detected as a fillet if, and only if, when the radius variance is below a second threshold;
- the fitting of each curve with a respective circle comprises determining a plane closest to the curve with respect to a least square distance, projecting the curve on the plane, and determining a circle closest to the projected curve with respect to a predetermined distance;
- the method further comprises calculating an average radius of the set of circles, and when a fillet is detected, creating a fillet CAD feature parameterized by the average radius;
- the method further comprises providing a first mesh representing an outer surface of a mechanical part, segmenting the first mesh into a set of second meshes, for one or more second meshes, determining curves over the second mesh that each follows maximal curvature directions of the second mesh, fitting each curve with a respective circle, thereby obtaining a set of circles, calculating a value of one or more statistics of the set of circles, and detecting whether the second mesh is a fillet or not as a function of the value of the one or more statistics;
- when the method detects that a second mesh is a fillet, identifying adjacent faces input of the fillet; and/or
- the providing of a first mesh comprises obtaining the first mesh from a scan of the mechanical part, or obtaining the first mesh from a CAD design.

It is further provided a computer program comprising instructions for performing the method.

It is further provided a computer readable storage medium having recorded thereon the computer program.

It is further provided a system comprising a processor coupled to a memory, the memory having recorded thereon the computer program.

## BRIEF DESCRIPTION OF THE DRAWINGS

Non-limiting examples will now be described in reference to the accompanying drawings, where:

- FIG. 1 shows a flowchart of an example of the method;
- FIG. 2 shows an example of a graphical user interface of the system;
- FIG. 3 shows an example of the system; and
- FIG.s 4 to 7B illustrate the method.

## DETAILED DESCRIPTION

It is proposed a computer-implemented method comprising providing a mesh representing a segment of an outer surface of a portion of a mechanical part, and determining curves over the mesh. Each of the determined curves follows maximal curvature directions of the mesh. The method further comprises fitting each curve with a respective circle, thereby obtaining a set of circles. The method further comprises calculating a value of one or more statistics of the set of circles, and detecting whether the mesh is a fillet or not as a function of the value of the one or more statistics.

The method constitutes an improved solution for processing CAD models of a portion of a mechanical represented by a mesh. The detection of a fillet feature in a provided mesh of a segment of an outer surface of a portion of a mechanical part allows to prepare the mechanical part in view of the manufacturing, for example by adapting the detected fillet CAD feature to the manufacturing. Such adaptation is particularly relevant in the field of manufacturing CAD as discussed hereinbelow. In manufacturing CAD, detecting a fillet CAD feature allows an easy manipulation and/or editability and/or efficient storage of the mechanical part in memory. Notably, the method detects if the mesh is a fillet. Such a computer-implemented fillet detection may form or be a part of an automated computer-implemented method for such a purpose and without or with reduced human intervention (e.g., a user or more specifically a technician).

A fillet (CAD) operator on a 3D CAD model, as known *per se,* consists in a rounding of an edge between (i.e., shared by) two adjoint faces. Such a rounding may be obtained by taking the envelope of a ball rolling along said edge with tangent support on both of said faces. Thus, a fillet operator generates a surface that exhibit one constant principal curvature value, for example, with a maximum (absolute value) curvature.

Specifically, the method performs a fillet detection by determining curves over the mesh such that each curve follows maximal curvature directions of the mesh. Thus, such curves are based on the principal curvature directions of the outer surface of said portion of said mechanical part. The method then detects a fillet based on such curves. Such a detection is advantageous over the prior art which relies on curvature distribution for fillet detection, in particular when the provided (input) mesh is noisy (e.g., when the mesh is obtained upon a 3D scan process which is described hereinbelow). These advantages are at least twofold.

Firstly, the curvature computations, as in the prior art, may be significantly affected by the noise level on noisy meshes in terms of accuracy as such curvature computations are not robust to noise. The known methods which rely on curvature value distribution for fillet detection and its parametrization may comprise a statistical analysis of the principal curvature values to find if this distribution is peaked around a certain value. If the distribution is peaked, these methods estimate that the surface constitutes fillet-like surface with a fillet radius inversely related to said certain value. Such methods, in particular on noisy meshes, are not very accurate. In contrast, the method of the present disclosure considers the maximal curvature directions which are more robust to be calculated compared to curvature values in presence of noise in the mesh. Such a robustness constitutes obtaining the detection of a fillet (and parametrization of a detected fillet) more precisely in cases of noisy meshes.

Secondly, in order to obtain a curvature value on a mesh, known prior art methods rely on values of curvature (e.g., a distribution of curvature values over the mesh) while the method of the present disclosure detects the filet based on directions defined according to (maximal) curvature instead of respective values of curvature. Due to non-smoothness of outer surfaces of the mechanical part and/or non-smoothness of the provided mesh representing said outer surfaces, the curvature values may not be precise enough. Indeed, such non-smoothness makes the curvature computation less accurate. In contrast, computing the curvature directions as in the method of the present disclosure is significantly more robust than computing curvature values. In practice, and in order to compute the value of the curvature at each point, known prior art methods use averaging techniques to compute the curvature value respective to each point. Such averaging techniques are defined by some parameters which are not straightforward to set and have significant impact on the obtained curvature value, thereby the obtained curvature is highly affected by said averaging parameters which are not clear how to set. Such averaging parameters, on the other hand, do not affect the curvature directions.

The origin of the provided mesh is now discussed.

The provided mesh may stem from physical measurements on the mechanical part, for example on the outer surface of the portion of the mechanical part. Such measurements may be performed within a reconstruction process as discussed hereinbelow, e.g., a 3D scanning of the real object. In such cases, the providing of the mesh may comprise the reconstruction process which obtains the mesh representing a segment of an outer surface of a portion of the mechanical part from physical measurements, optionally upon a tessellation applied on the measurements.

Exploiting such meshes obtained by a reconstruction process have some practical challenges. In particular, such meshes may comprise a significant amount of noise (e.g., due to limited precision of sensors used to perform the physical measurements on the real object), be incomplete (e.g., due to inaccessibility of some parts of the real object to perform the physical measurement), and/or be not accompanied by a respective CAD feature tree. Each of said challenges may impede using the provided mesh in reverse engineering applications, as it reduces the accuracy of a final manufactured object and/or restricts the ability of a user to apply modifications before finalizing the mechanical part to be manufactured.

The provided mesh may alternatively originate from a CAD or CAE model designed by another CAD system and for which the CAD feature tree is unknown or inaccessible. In such cases, the providing of the mesh may comprise inputting (e.g., by reading from a local memory or a remote database) the mesh (e.g., upon a transform from an existing CAD/CAE model), and generating a respective CAD feature tree based on the inputted mesh.

Applications of the method are now discussed.

As previously mentioned, detecting whether a (provided) mesh is a fillet or not is particularly relevant in the field of manufacturing CAD, that is, for software solutions to assist design processes and manufacturing processes, whereby the objective is to produce a physical product corresponding to a designed CAD model (e.g., a CAD 3D model). Within this context, the CAD model represents a manufacturing product, that may be manufactured downstream to its design. The method may thus be part of such a design and/or manufacturing process of a mechanical product. The method may be part of or may form a design process where the method allows or participates in (e.g., is a part of) obtaining a feature tree from the representation of a mechanical product. This step of obtaining the feature tree may form a step of CAE to CAD conversion "Designing a mechanical part" designates any action or series of actions which is at least a part of a process of elaborating a modeled object of the mechanical part. The method may form such a process or may form at least a part of the process.

The method thus generally manipulates modeled objects, such as the mesh and optionally to output a parameterized fillet upon detection. A modeled object is any object defined by data stored e.g., in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD, CAE, PLM and/or CAM system, as will be apparent from the definitions of such systems provided below.

By CAD solution (e.g., a CAD system or a CAD software), it is additionally meant any system, software or hardware, adapted at least for designing a modeled object on the basis of a graphical representation of the modeled object and/or on a structured representation thereof (*e.g.*, a feature tree), such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g., non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 3D modeled object, e.g., representing a product such as a part or an assembly of parts, or possibly an assembly of products. The 2D or 3D modeled object may be a manufacturing product, *i.e.,* a product to be manufactured. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e., increases the speed at which designers statistically accomplish their task). This speeds up the manufacturing process in the industry, as the design of the products is part of the manufacturing process.

The 3D modeled object may represent the geometry of a product to be manufactured in the real world subsequent to the completion of its virtual design with for instance a CAD/CAE software solution or CAD/CAE system, such as a (e.g. mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD/CAE software solution allows the design of products in various and unlimited industrial fields, including: aerospace, architecture, construction, consumer goods, high-tech devices, industrial equipment, transportation, marine, and/or offshore oil/gas production or transportation. The 3D modeled object designed by the method may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defence products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electromechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

A CAD system may be history-based. In this case, a modeled object is further defined by data comprising a history of geometrical features. A modeled object may indeed be designed by a physical person (i.e., the designer/user) using standard modeling features (e.g., extrude, revolute, cut, and/or round) and/or standard surfacing features (e.g., sweep, blend, loft, fill, deform, and/or smoothing). Many CAD systems supporting such modeling functions are history-based system. This means that the creation history of design features is typically saved through an acyclic data flow linking the said geometrical features together through input and output links. The history-based modeling paradigm is well known since the beginning of the 80's. A modeled object is described by two persistent data representations: history and B-rep (i.e., boundary representation). The B-rep is the result of the computations defined in the history. The shape of the part displayed on the screen of the computer when the modeled object is represented is (e.g., a tessellation of) the B-rep. The history of the part is the design intent. Basically, the history gathers the information on the operations which the modeled object has undergone. The B-rep may be saved together with the history, to make it easier to display complex parts. The history may be saved together with the B-rep in order to allow design changes of the part according to the design intent.

By PLM solution, it is additionally meant any solution adapted for the management of a modeled object representing a physical product to be manufactured. In a PLM solution, a modeled object is thus defined by data suitable for the manufacturing of a physical object. These may typically be dimension values and/or tolerance values. For a correct manufacturing of an object, it is indeed better to have such values. For example, a PLM solution may manage fabrication tolerances, for example, in machining or molding regarding a provided extrusion feature in a CAD model.

By CAE solution, it is additionally meant any solution, software of hardware, adapted for the analysis of the physical behavior of a modeled object. A well-known and widely used CAE technique is the Finite Element Model (FEM) which is equivalently referred to as CAE model hereinafter. An FEM typically involves a division of a modeled object into elements, i.e., a finite element mesh, which physical behaviours can be computed and simulated through equations. Such CAE solutions are provided by Dassault Systèmes under the trademark SIMULIA®. Another growing CAE technique involves the modeling and analysis of complex systems composed a plurality of components from different fields of physics without CAD geometry data. CAE solutions allow the simulation and thus the optimization, the improvement and the validation of products to manufacture. Such CAE solutions are provided by Dassault Systèmes under the trademark DYMOLA®. CAE may be used to ensure that various structural requirements (such as, but not limited to, mass, stiffness, strength, durability) are achieved by a new CAD model. Some of these requirements may be called Key Performance Indicators (KPIs). For many industrial products (for example cars, airplanes, consumer packaged goods, hi-tech), these KPIs are in conflict e.g., lower mass usually causes lower stiffness. Thus, optimization methods are often applied to find the best trade-off between the KPIs.

By CAM solution, it is meant any solution, software of hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, Solidworks or DELMIA®.

CAD and CAM solutions are therefore tightly related. Indeed, a CAD solution focuses on the design of a product or part and CAM solution focuses on how to make it. Designing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, it is a virtual twin, also called digital twin, of an object to be manufactured with two objectives:

- checking the correct behavior of the object to be manufactured in a specific environment; and
- ensuring the manufacturability of the object to be manufactured.

PDM stands for Product Data Management. By PDM solution, it is meant any solution, software of hardware, adapted for managing all types of data related to a particular product. A PDM solution may be used by all actors involved in the lifecycle of a product: primarily engineers but also including project managers, finance people, salespeople and buyers. A PDM solution is generally based on a product-oriented database. It allows the actors to share consistent data on their products and therefore prevents actors from using divergent data. Such PDM solutions are provided by Dassault Systèmes under the trademark ENOVIA®.

The modeled object taken as input by/provided to the method is a mesh, thus a 3D discrete geometrical representation of a manufacturing product/mechanical product/mechanical part. The discrete geometrical representation is a data structure which comprises a discrete set of pieces of data. Each piece of data may specify an element of the product/mechanical part, and be referred to as a discrete element. The discrete geometrical representation may be 3D. The discrete geometrical representation may in examples comprise a number of such pieces of data higher than 100, 1000, or 10000. A mesh, as known *per se,* has faces and edges and is defined according to a connectivity between said faces and said edges.

In case of a 3D mesh, the 3D discrete geometrical representation may be a solid/volume 3D discrete geometrical representation of the product/mechanical part, such as a solid 3D finite element model (FEM) or a 3D volume mesh (e.g., a 3D tetrahedral or 3D polyhedral mesh). In such a case, each piece of data may represent a respective geometrical entity positioned in a 3D space such that the pieces of data form a solid representation of the mechanical part/product (i.e., "solid 3D discrete geometrical representation"). Each geometrical entity may represent a respective location (i.e., a material point) of the 3D object (in other words, a respective portion of material constitutive of a solid represented by the 3D object). The aggregation (i.e., union or juxtaposition) of the geometrical entities represents altogether the 3D object as a solid/volume. The 3D discrete geometrical representation may alternatively be a skin 3D discrete geometrical representation, representing a skin of the product/mechanical part, such as a 3D surface mesh (e.g., a triangular surface mesh) or a tessellation. In such a case, each piece of data may represent a respective geometrical entity positioned in a 3D space, such that the pieces of data form a representation of the mechanical product's skin (i.e., "skin 3D discrete geometrical representation"). In such a case, each geometrical entity represents a respective location (i.e., a material point) on an outer surface of the 3D object (in other words, a respective portion of outer surface of the volume occupied by material constitutive of a solid represented by the object). The aggregation (i.e., union or juxtaposition) of the geometrical entities represents altogether at least part of the outer surface of the object.

The method, being provided by a mesh or equivalently a discrete geometrical representation as described above, detects if the provided mesh is a fillet or not. In cases where the method detects a fillet is detected, the method allows (or may be followed) by adding the detected fillet to an already existing CAD object based on the provided mesh. Alternatively, the method may instantiate a new CAD object from the detected fillet.

The discrete geometrical representation may be, or may be converted into further to the method, a CAE model, also referred to as "finite element model (FEM)". The CAE model may stem from a CAD model representing the mechanical part/product, e.g., the method comprises at an initial stage obtaining the CAE model from the CAD model, for example using a meshing (e.g., triangulation) process. Conversely, a CAE model may be converted into a CAD model. The method may design/output a CAE model which may be then converted into a corresponding CAD model. The method may comprise, or may be included in wider process that comprises, or may form a solution to, (e.g., automatically) converting the CAE model designed/outputted by the method into a CAD model, by using any known (e.g., automatic) CAE to CAD conversion process that converts a CAE model into a CAD model.

The modeled object outputted by the method may alternatively be a CAD model, for example comprising or consisting in a feature tree and/or a B-rep. Such a model may stem from a CAE model and may results from a CAE to CAD conversion process, that the method may for example comprise at an initial stage.

The CAD model may be feature-based (e.g., it may comprise a feature tree, and optionally a corresponding B-rep obtained by executing the feature tree). A feature-based 3D model allows (e.g., during the determination of a manufacturing file or CAM file as discussed hereinafter) the detection and an automatic resolution of a geometry error in a CAD model such as a clash that will affect the manufacturing process. A clash is an interpenetration between two parts of a 3D model for example due to their relative motion. Furthermore, this clash may sometimes only be detected via a finite element analysis based on the CAD feature-based model. Therefore, a resolution of a clash can be performed with or automatically by the CAD solution by iteratively modifying the parameters of the features and doing a finite element analysis.

As another example, a feature-based 3D model allows (e.g., during the determination of a manufacturing file or CAM file as discussed hereinafter) an automatic creation of a toolpath for a machine via a computer numerical control (CNC). With CNC, each object to be manufactured gets a custom computer program, stored in and executed by the machine control unit, a microcomputer attached to the machine. The program contains the instructions and parameters the machine tool will follow. Mills, lathes, routers, grinders and lasers are examples of common machine tools whose operations can be automated with CNC.

A key characteristic of a CAD model is that it may be designed exactly and unambiguously by chaining a small number of high-level parameterized design operations (including for example, but to limited to, sketch, extrusion, chamfer) and edited by modifying its high-level parameters. That this is a key distinction with the polyhedral representations such as a triangular surface mesh which may represent any 3D shape but do not provide modification or parameterization capabilities required in an industrial design context.

A CAD model is a parameterized model of a (e.g., mechanical) part/product, it is lighter in terms of memory footprint than other models such as a CAE model. Indeed, instead of storing a collection of discrete geometrical elements such as finite elements, a CAD model allows the storing of a list of features and parameters, which is lighter in terms of storage and memory footprint. Working on CAD models thus reduced memory requirements for the underlying systems, as compared for example to CAE models, in addition to facilitate editability of the model. This amounts to say that a CAE to CAD conversion process in fact compresses the CAE model into a CAD model which is lighter in terms of memory requirements (e.g., footprint), in addition to transforming the CAE model into a more easily editable CAD model.

The generation of a custom computer program from CAD files may be automated. Such generation may therefore be error prone and may ensure a perfect reproduction of the CAD model to a manufactured product. CNC is considered to provide more precision, complexity and repeatability than is possible with manual machining. Other benefits include greater accuracy, speed and flexibility, as well as capabilities such as contour machining, which allows milling of contoured shapes, including those produced in 3D designs.

The B-rep (i.e., boundary representation) is a 3D representation of a mechanical part. Specifically, the B-rep is a persistent data representation describing the 3D modeled object representing the mechanical part. The B-rep may be the result of computations and/or a series of operations carried out during a designing phase of the 3D modeled object representing the mechanical part. The shape of the mechanical part displayed on the screen of the computer when the modeled object is represented is (e.g., a tessellation of) the B-rep. In examples, the B-rep represents a part of the model object.

A B-Rep includes topological entities and geometrical entities. Topological entities are: face, edge, and vertex. Geometrical entities are 3D objects: surface, plane, curve, line, point. By definition, a face is a bounded portion of a surface, named the supporting surface. An edge is a bounded portion of a curve, named the supporting curve. A vertex is a point in 3D space. They are related to each other as follows. The bounded portion of a curve is defined by two points (the vertices) lying on the curve. The bounded portion of a surface is defined by its boundary, this boundary being a set of edges lying on the surface. The boundary of the edges of the face are connected by sharing vertices. Faces are connected by sharing edges. Two faces are adjacent if they share an edge. Similarly, two edges are adjacent if they share a vertex. In the CAD system, the B-Rep gathers in an appropriate data structure the "is bounded by" relationship, the relationship between topological entities and supporting geometries, and mathematical descriptions of supporting geometries. An internal edge of a B-Rep is an edge shared by exactly two faces. By definition, a boundary edge is not shared, it bounds only one face. By definition, a boundary face is bounded by at least one boundary edge. A B-Rep is said to be closed if all its edges are internal edges. A B-Rep is said to be open is it includes at least one boundary edge. A closed B-Rep is used to model a thick 3D volume because it defines the inside portion of space (virtually) enclosing material. An open B-Rep is used to model a 3D skin, which represents a 3D object the thickness of which is sufficiently small to be ignored.

A key advantage of the B-Rep over any other representation types used in CAD modeling is its ability to represent arbitrary shapes exactly. All other representations in use, such as point clouds, distance fields and meshes, perform an approximation of the shape to represent by discretization. The B-Rep, on the other hand, contains surface equations that represent the exact design and therefore constitutes a true "master model" for further manufacturing, whether this be generation of toolpaths for CNC, or discretizing into the correct sample density for a given 3D Printer technology. In other words, by using a B-Rep, the 3D model may be an exact representation of the manufactured object. The B-Rep is also advantageous for simulating the behavior of a 3D model. In terms of stress, thermal, electromagnetic or other analysis, it supports local refinement of the simulation meshes to capture physical phenomena, and for kinematics it supports true contact modeling between curved surfaces. Finally, a B-Rep allows a small memory and/or file footprint. First, because the representation contains surfaces based only on parameters. In other representations such as meshes, the equivalent surface comprises up to thousands of triangles. Second, because a B-Rep doesn't contain any history-based information.

The method may be included in a production process, which may comprise, after performing the method, producing a physical product corresponding to the modeled object designed/processed/outputted by the method. The production process may comprise the following steps:

- (e.g., automatically) applying the method, thereby obtaining the CAD model outputted by the method (which may include a fillet CAD feature);
- optionally, (e.g., automatically) converting the obtained CAE model into a CAD model as previously discussed, using a (e.g., automatic) CAE to CAD conversion process;
- using the obtained CAD model for manufacturing the part/product.

Converting the CAE model into a CAD model may comprise executing the following (e.g., fully automatic) conversion process that takes as input a CAE and converts it into a CAD model comprising a feature-tree representing the product/part. The conversion process includes the following steps (where known fully automatic algorithms exist to implement each of these steps):

- segmenting the CAE model, or an outer surface/skin thereof, thereby obtaining a segmentation of the CAE model into segments, e.g., each forming a surface portion of the model;
- detecting geometries of CAD features by processing the segments, e.g., including detecting segments or groups of segments each forming a given CAD feature geometry (e.g., a fillet, an extrusion, a revolution, or any canonical primitive), and optionally geometric characteristics thereof (e.g., a fillet radius and/or center, extrusion axis, revolution axis, or profiles);
- parameterizing the detected geometries, e.g., based on the geometries and/or on said geometric characteristics thereof;
- fitting CAD operators each to a respective portion of the CAE model, based on a geometry of said portion, for example by aggregating neighbouring segments detected as being part of a same feature geometry;
- encoding the geometries and the corresponding CAD operators into a feature tree;
- optionally, executing the feature tree, thereby obtaining a B-rep representation of the product;
- outputting the feature tree and optionally the B-rep, the feature tree and optionally the B-rep forming the CAD model.

Using a CAD model for manufacturing designates any real-world action or series of action that is/are involved in/participate to the manufacturing of the product/part represented by the CAD model. Using the CAD model for manufacturing may for example comprise the following steps:

- editing the obtained CAD model, e.g., parameters of the fillet;
- performing simulation(s) based on the CAD model or on a corresponding CAE model (e.g., the CAE model from which the CAD model stems, after a CAE to CAD conversion process), such as simulations for validation of mechanical, use and/or manufacturing properties and/or constraints (*e.g.,* structural simulations, thermodynamics simulation, aerodynamic simulations);

- editing the CAD model based on the results of the simulation(s), e.g., modifying the parameters of a fillet, or adding fillet CAD operator to the CAD model to obtain a CAD model with better mechanical, use and/or manufacturing properties and/or constraints (e.g., less aerodynamic drag on the surface, easier unmolding of a product molded according to the CAD model);
- (i.e., depending on the manufacturing process used, the production of the mechanical product may or may not comprise this step) (e.g., automatically) determining a manufacturing file/CAM file based on the (e.g., edited) CAD model, for production/manufacturing of the manufacturing product;
- sending the CAD file and/or the manufacturing file/CAM file to a factory; and/or
- (e.g., automatically) producing/manufacturing, based on the determined manufacturing file/CAM file or on the CAD model, the mechanical product originally represented by the model outputted by the method. This may include feeding (e.g., automatically) the manufacturing file/CAM file and/or the CAD file to the machine(s) performing the manufacturing process.

This last step of production/manufacturing may be referred to as the manufacturing step or production step. This step manufactures/fabricates the part/product based on the CAD model and/or the CAM file, e.g., upon the CAD model and/or CAD file being fed to one or more manufacturing machine(s) or computer system(s) controlling the machine(s). The manufacturing step may comprise performing any known manufacturing process or series of manufacturing processes, for example one or more additive manufacturing steps, one or more cutting steps (e.g. laser cutting or plasma cutting steps), one or more stamping steps, one or more forging steps, one or more bending steps, one or more deep drawing steps, one or more molding steps, one or more machining steps (e.g. milling steps) and/or one or more punching steps. Because the design method improves the design of a model (CAE or CAD) representing the part/product, the manufacturing and its productivity are also improved.

Editing the CAD model may comprise, by a user (i.e., a designer), performing one or more of the CAD model, e.g., by using a CAD solution. The modifications of the CAD model may include one or more modifications each of a geometry and/or of a parameter of the CAD model. The modifications may include any modification or series of modifications performed on a feature tree of the model (e.g., modification of feature parameters and/or specifications) and/or modifications performed on a displayed representation of the CAD model (e.g., a B-rep). The modifications are modifications which maintain the technical functionalities of the part/product, i.e., the user performs modifications which may affect the geometry and/or parameters of the model but only with the purpose of making the CAD model technically more compliant with the downstream use and/or manufacturing of the part/product. Such modifications may include any modification or series of modification that make the CAD model technically compliant with specifications of the machine(s) used in the downstream manufacturing process. Such modifications may additionally or alternatively include any modification or series of modification that make the CAD model technically compliant with a further use of the product/part once manufactured, such modification or series of modifications being for example based on results of the simulation(s).

The CAM file may comprise a manufacturing step up model obtained from the CAD model. The manufacturing step up may comprise all data required for manufacturing the mechanical product so that it has a geometry and/or a distribution of material that corresponds to what is captured by the CAD model, possibly up to manufacturing tolerance errors. Determining the production file may comprise applying any CAM (Computer-Aided Manufacturing) or CAD-to-CAM solution for (e.g., automatically) determining a production file from the CAD model (e.g., any automated CAD-to-CAM conversion algorithm). Such CAM or CAD-to-CAM solutions may include one or more of the following software solutions, which enable automatic generation of manufacturing instructions and tool paths for a given manufacturing process based on a CAD model of the product to manufacture:

- Fusion 360,
- FreeCAD,
- CATIA,
- SOLIDWORKS,
- The NC Shop Floor programmer of Dassault Systèmes illustrated on https://mv.3dexperience.3ds.com/welcome/fr/compass-world/rootroles/nc-shop-floor-programmer,
- The NC Mill-Turn Machine Programmer of Dassault Systèmes illustrated on https://my.3dexperience.3ds.com/welcome/fr/compass-world/rootroles/nc-mill-turn-machine-programmer, and/or
- The Powder Bed Machine Programmer of Dassault Systèmes illustrated on https://cloud.academy.3ds.com/explorer/r2019x/role_apw.html.

The product/part may be an additive manufacturable part, i.e., a part to be manufactured by additive manufacturing (i.e., 3D printing). In this case, the production process does not comprise the step of determining the CAM file and directly proceeds to the producing/manufacturing step, by directly (e.g., and automatically) feeding a 3D printer with the CAD model. 3D printers are configured for, upon being fed with a CAD model representing a mechanical product (e.g., and upon launching, by a 3D printer operator, the 3D printing), directly and automatically 3D print the mechanical product in accordance with the CAD model. In other words, the 3D printer receives the CAD model, which is (e.g., automatically) fed to it, reads (*e.g.,* automatically) the CAD model, and prints (*e.g.,* automatically) the part by adding together material, e.g., layer by layer, to reproduce the geometry and/or distribution of material captured by the CAD model. The 3D printer adds the material to thereby reproduce exactly in reality the geometry and/or distribution of material captured by the CAD model, up to the resolution of the 3D printer, and optionally with or without tolerance errors and/or manufacturing corrections. The manufacturing may comprise, *e.g.,* by a user (*e.g.,* an operator of the 3D printer) or automatically (by the 3D printer or a computer system controlling it), determining such manufacturing corrections and/or tolerance errors, for example by modifying the CAD file to match specifications of the 3D printer. The production process may additionally or alternatively comprise determining (e.g. automatically by the 3D printer or a computer system controlling it) from the CAD model, a printing direction, for example to minimize overhang volume (as described in European patent No. 3327593, which is incorporated herein by reference), a layer-slicing (i.e., determining thickness of each layer, and layer-wise paths/trajectories and other characteristics for the 3D printer head (e.g., for a laser beam, for example the path, speed, intensity/temperature, and other parameters).

The product/part may alternatively be a machined part (*i.e.,* a part manufactured by machining), such as a milled part (*i.e.,* a part manufactured by milling). In such a case, the production process may comprise a step of determining the CAM file. This step may be carried out automatically, by any suitable CAM solution to automatically obtain a CAM file from a CAD model of a machined part. The determination of the CAM file may comprise (e.g., automatically) checking if the CAD model has any geometric particularity (e.g., error or artefact) that may affect the production process and (e.g., automatically) correcting such particularities. For example, machining or milling based on the CAD model may not be carried out if the CAD model still comprises sharp edges (because the machining or milling tool cannot create sharp edges), and in such a case the determination of the CAM file may comprise (*e.g.* automatically) rounding or filleting such sharp edges (*e.g.* with a round or fillet radius that corresponds, e.g. substantially equals up to a tolerance error, the radius of the cutting head of the machining tool), so that machining or milling based on the CAD model can be done. More generally, the determination of the CAM file may automatically comprise rounding or filleting geometries within the CAD model that are incompatible with the radius of the machining or milling tool, to enable machining/milling. This check and possible corrections (e.g. rounding or filleting of geometries) may be carried out automatically as previously discussed, but also, by a user (e.g. a machining engineer), who performs the correction by hand on a CAD and/or CAM solution, e.g. the solution constraining the user to perform corrections that make the CAD model compliant with specifications of the tool used in the machining process.

Further to the check, the determination of the CAM file may comprise (e.g., automatically) determining the machining or milling path, i.e., the path to be taken by the machining tool to machine the product. The path may comprise a set of coordinates and/or a parameterized trajectory to be followed by the machining tool for machining, and determining the path may comprise (e.g., automatically) computing these coordinates and/or trajectory based on the CAD model. This computation may be based on the computation of a boundary of a Minkowski subtraction of the CAD model by a CAD model representation of the machining tool, as for example discussed in European Patent Application EP21306754.9 filed on 13 December 2021 by Dassault Systèmes, and which is incorporated herein by reference. It is to be understood that the path may be a single path, e.g., that the tool continuously follows without breaking contact with the material to be cut. Alternatively, the path may be a concatenation of a sequence sub-paths to be followed in a certain order by the tool, e.g., each being continuously followed by the tool without breaking contact with the material to be cut. Optionally, the determination of the CAM file may then comprise (e.g., automatically) setting machine parameters, including cutting speed, cut/pierce height, and/or mould opening stroke, for example based on the determined path and on the specification of the machine. Optionally, the determination of the CAM file may then comprise (e.g., automatically) configuring nesting where the CAM solution decides the best orientation for a part to maximize machining efficiency.

In this case of a machining or milling part, the determining of the CAM file thus results in, and outputs, the CAM file comprising a machining path, and optionally the set machine parameters and/or specifications of the configured nesting. This outputted CAM file may be then (e.g. directly and automatically) fed to the machining tool and/or the machining tool may then (e.g. directly and automatically) be programmed by reading the file, upon which the production process comprises the producing/manufacturing step where the machine performs the machining of the product according to the production file, e.g. by directly and automatically executing the production file. The machining process comprises the machining tool cutting a real-world block of material to reproduce the geometry and/or distribution of material captured by the CAD model, *e.g.,* up to a tolerance error (*e.g.,* tens of microns for milling).

The product/part may alternatively be a moulded part, *i.e.,* a part manufactured by molding (e.g., injection-molding). In such a case, the production process may comprise the step of determining the CAM file. This step may be carried out automatically, by any suitable CAM solution to automatically obtain a CAM file from a CAD model of a moulded part. The determining of the CAM file may comprise (e.g., automatically) performing a sequence of molding checks based on the CAD model to check that the geometry and/or distribution of material captured by the CAD model is adapted for molding, and (e.g., automatically) performing the appropriate corrections if the CAD model is not adapted for moulding.

Performing the checks and the appropriate corrections (if any) may be carried out automatically, or, alternatively, by a user (e.g. a molding engineer), for example using a CAD and/or CAM solution that allows a user to perform the appropriate corrections on the CAD model but constraints him/her corrections that make the CAD model compliant with specifications of the molding tool(s). The checks may include verifying that the virtual product as represented by the CAD model is consistent with the dimensions of the mould and/or verifying that the CAD model comprises all the draft angles required for demoulding the product, as known *per se* from molding. The determining of the CAM file may then further comprise determining, based on the CAD model, a quantity of liquid material to be used for molding, and/or a time to let the liquid material harden/set inside the mould, and outputting a CAM file comprising these parameters. The production process then comprises (e.g. automatically) performing the molding based on the outputted file, where the mould shapes, for the determined hardening time, a liquid material into a shape that corresponds to the geometry and/or distribution of material captured by the CAD model, *e.g.* up to a tolerance error (*e.g.* up to the incorporation of draft angles or to the modification of draft angles, for demoulding).

The product/part may alternatively be a stamped part, also possibly referred to as "stamping part", *i.e.,* a part to be manufactured in a stamping process. The production process may in this case comprise (e.g., automatically) determining a CAM file based on the CAD model. The CAD model represents the stamping part, e.g., possible with one or more flanges if the part is to comprise some, and possibly in this latter case with extra material to be removed so as to form an unfolded state of one or more flanges of the part, as known *per se* from stamping. The CAD model thus comprises a portion that represents the part without the flanges (which is the whole part in some cases) and possibly an outer extra patch portion that represents the flanges (if any), with possibly the extra material (if any). This extra patch portion may present a g2-continuity over a certain length and then a g1-continuity over a certain length.

The determination of the CAM file may in this stamping case comprise (e.g., automatically) determining parameters of the stamping machine, for example a size of a stamping die or punch and/or a stamping force, based on the geometry and/or distribution of material of the virtual product as captured by the CAD model. If the CAD model also comprises the representation of the extra material to be removed so as to form an unfolded state of one or more flanges of the part, the extra material to be removed may for example be cut by machining, and determining the CAM file may also comprise determining a corresponding machining CAM file, e.g., as discussed previously. If there are one or more flanges, determining the CAM file may comprise determining geometrical specifications of the g2-continuity and g1-continuity portions that allow, after the stamping itself and the removal of the extra material, to fold in a folding process the flanges towards an inner surface of the stamped part and along the g2-continuity length. The CAM file thereby determined may thus comprise: parameters of the stamping tool, optionally said specifications for folding the flanges (if any), and optionally a machining production file for removing the extra material (if any).

The stamping production process may then output, e.g., directly and automatically, the CAM file, and perform the stamping process (e.g., automatically) based on the file. The stamping process may comprise stamping (e.g., punching) a portion of material to form the product as represented by the CAD file, that is possibly with the unfolded flanges and the extra material (if any). Where appropriate, the stamping process may then comprise cutting the extra material based on the machining production file and folding the flanges based on said specifications for folding the flanges, thereby folding the flanges on their g2-continuity length and giving a smooth aspect to the outer boundary of the part. In this latter case, the shape of the part once manufactured differ from its virtual counterpart as represented by the CAD model in that the extra material is removed and the flanges are folded, whereas the CAD model represents the part with the extra material and the flanges in an unfolded state.

The fillet-detection offered by the method is now discussed.

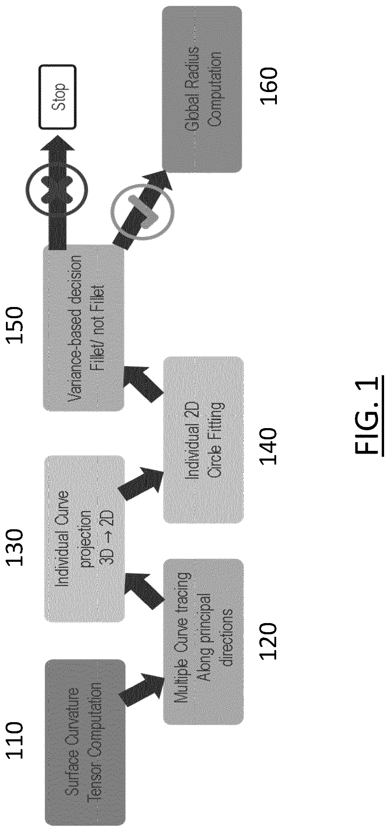

As mentioned above, and in reference to FIG. 1, the method comprises providing a mesh representing a segment of an outer surface of a portion of a mechanical part. By "providing" an input (e.g., the mesh), it is meant obtaining said input by the method. Such an obtaining may mean or comprise either downloading said input (e.g., from an online database, or an online cloud), or retrieving said input from a memory (e.g., a persistent memory). The provided mesh may be a (skin/volume) 3D mesh as described above.

The method then, in step 1020, determines curves over the mesh such that each (of the curves) follows maximal curvature directions of the mesh. As known in the field of differential geometry, by "maximal curvature directions" of a surface (or equivalently a mesh if said surface is represented by a mesh) it is meant directions defined by an ensemble of principal directions at each point on said surface corresponding to a maximum value of curvature. In other words, each curve determined at step 120 is a curve lying on the mesh (more precisely, on the surface represented by the mesh), and for each point of the curve, the value of curvature at that point is maximal, i.e., higher than or equal to the value of curvature - at that same point - of any other curve lying on the mesh and passing through said point.

Such a determination of said curves of step 120, may comprise computing a distribution of maximal curvature directions over the mesh according to step 110. Such a distribution of maximal curvature directions over the mesh may consist in (a value of) the maximal curvature direction at one or more points inside (i.e., interior of) each face of the mesh. Additionally, or alternatively, the distribution may consist in (a value of) the maximal curvature direction on one or more edges of each face of the mesh, i.e., on at least part of a boundary of each fact. The determining of said curves may further comprise starting from a plurality of seed points belonging to the mesh, and tracing integral curves of the (computed) distribution of maximal curvature directions. As known *per se* by "tracing integral curves of the distribution of maximal curvature directions" it is meant solving a system of differential equations in which a vector field defined by the maximal curvature direction is a slope field for said system of differential equations such that the integral curves are tangent to the slope field at each point.

In examples, the method may compute the distribution of maximal curvature directions over the whole provided mesh prior to determining the curves. Alternatively, the method may compute the distribution on-the-fly and in accordance with the tracing the integral curves. In such cases, the method computes a required part of the distribution, for example, in a vicinity (i.e., neighbourhood) of a point on the mesh, in order to determine (a part of) a curve in a region corresponding to the required part of the distribution.

In examples, the computing of a distribution of maximal curvature directions comprises computing a curvature tensor field distributed over the mesh. As known per se a "curvature tensor", is a symmetric bilinear form on tangent space of a manifold (like $T_pM$ as discussed below) or in a space (e.g., $\mathbb{R}^3$ ), while a "curvature tensor field on a surface" represents a curvature tensor for each point on said surface.

As known, direct computation of curvature tensor fields for non-smooth surfaces (i.e., computing curvature tensors for all point of said surfaces) like meshes is not well-defined; thereby the method may compute the curvature tensor field distributed over the mesh using some approximations. In examples of such approximations, the computing of the curvature tensor field may assign a curvature tensor to each face and/or each vertex and/or barycenter of each face of the mesh and the method may then compute (i.e., approximate) the curvature tensor field by interpolation of such assigned curvature tensors over the whole mesh (i.e., for every point of the surface of the mesh). Such an interpolation may be linear (e.g., continuously linear) or constant on each face of the mesh. The method may assign said curvature to each face and/or each vertex by computing an averaging of one or more curvature tensors in a neighborhood of said face and/or vertex and/or barycenter of each face on the mesh. Said vertex may be the barycentre of said neighbourhood. Such examples are further described hereinbelow in relation to computing curvature tensor measures. Alternatively, the method may may assign said curvature to a plurality of chosen points (e.g., one or more of the vertices of the mesh and/or one or more of the faces' barycenter) by directly computing (e.g., approximate) curvature tensors on said plurality of chosen points.

In examples, the computing of the curvature tensor field is performed according to a normal cycles approach, a quadric fitting approach, or a circle fitting approach. The computing of the curvature tensor field according to a normal cycles approach is an example of assignment by averaging as discussed above. Computing of the curvature tensor field according to a normal cycles approach may be as described in the article by Cohen-Steiner, and Morvan. "Restricted Delaunay triangulations and normal cycle." In Proceedings of the nineteenth annual symposium on Computational geometry, pp. 312-321. 2003, and/or Lachaud, Romon, Thibert, and Coeurjolly. "Interpolated corrected curvature measures for polygonal surfaces." In Computer Graphics Forum, vol. 39, no. 5, pp. 41-54. 2020, which are incorporated herein by reference. Computing of the curvature tensor field according to a quadric fitting approach may be as described in the article by Petitjean, Sylvain. "A survey of methods for recovering quadrics in triangle meshes." ACM Computing Surveys (CSUR) 34, no. 2 (2002): 211-262 which is incorporated herein by reference. Computing of the curvature tensor field according to a circle fitting approach may be as described in the article by Taubin, Gabriel. "Estimating the tensor of curvature of a surface from a polyhedral approximation." In Proceedings of IEEE International Conference on Computer Vision, pp. 902-907. IEEE, 1995 which is incorporated herein by reference. The computing of the curvature tensor field according to a quadric fitting approach, or a circle fitting approach are examples of assignment by direct computation as discussed above.

As discussed above, the computing of a distribution of maximal curvature directions comprises computing a curvature tensor field distributed over the mesh based on a curvature tensor measure. By "curvature tensor measure" it is meant a measure which gives a curvature tensor on each region of an outer surface of the portion (or a part/region thereof). In other words, the curvature tensor measure defines a measure on a surface which in turn provides several curvature tensors for each portion/region/partition of said surface. The portion/region/partition of a surface is defined as element of the Borel $\sigma$-algebra of the surface (i.e., the $\sigma$-algebra generated by all the open subsets)

Said outer surface may be a general (i.e., smooth or continuous but non-smooth) surface. By computing a curvature tensor field "based on a curvature tensor measure" it is meant that the method computes said curvature tensor field by computing a curvature tensor measure on the mesh. As mentioned above, direct computation of curvature tensor fields for non-smooth surfaces is not well-defined, thereby the method constitutes an improved solution by computing curvature tensor field over a general surface (like a mesh) which is not necessarily smooth via using a curvature tensor measure. Further to this generalization for non-smooth surfaces, computing a curvature tensor field based on a curvature tensor measure provides computed curvature tensor fields which are more reliable especially in direction of the field.

In examples, the computing of the curvature tensor measure may assign a curvature tensor to each face and/or each vertex and/or barycenter of each face of the mesh as discussed above. Specifically, the method may associate

an approximate tensor $\mathbf{K}_p$ to a point p of the surface from a curvature tensor measure $\mathcal{K}$ by first setting a region $S_p$ of the surface

$$S_p = B(p,r) \cap \mathcal{M}$$

for some $r > 0$ (for a value of r on homogenous meshes between 3 to 5 times the average size of a face) and then by setting $\mathbf{K}_p = K(S_p)$. Here $B(p, r)$ is the ball of center p and radius $r$.

The method may compute a curvature tensor measure according to any known method in the field. In examples, the method may compute the curvature tensor measure by a normal cycles approach and as described in the already cited articles by Cohen-Steiner, and Morvan. "Restricted Delaunay triangulations and normal cycle." In Proceedings of the nineteenth annual symposium on Computational geometry, pp. 312-321. 2003, and/or Lachaud, Romon, Thibert, and Coeurjolly. "Interpolated corrected curvature measures for polygonal surfaces." In Computer Graphics Forum, vol. 39, no. 5, pp. 41-54. 2020, which are incorporated herein by reference.

In examples, the computing of the distribution of maximal curvature directions may further comprise decomposing the computed tensor field into at least two sub-tensor fields defined by a distribution of a first sub-tensor and a second sub-tensor. The first sub-tensor may correspond to a maximal curvature, and the second sub-tensor may correspond to a minimal curvature. The decomposing of the tensor field into at least two sub-tensors may decompose the curvature tensor field into three sub-tensor fields defined by a distribution of a first sub-tensor, a second sub-tensor, and a third sub-tensor. The first sub-tensor may correspond to a maximal curvature, the second sub-tensor may correspond to a minimal curvature, and the third sub-tensor may correspond to a perturbation term. In examples where the tensor field is computed by an averaging and/or interpolation as discussed above, the perturbation term may result from such an averaging and/or interpolation. The third sub-tensor may be zero in examples where the provided outer surface is smooth where a direct computation of the curvature tensor field on the surface is well-defined.

In examples, the method may compute the distribution of maximal curvature directions based on the decomposed tensor field. The method may in particular compute the distribution of the maximal curvature direction based on the first sub-tensor as discussed above. By "being based on the first sub-tensor" it is meant that the method may compute the distribution of maximal curvature directions based on the decomposed tensor in a tangent space to the outer surface.

The computing of a distribution of maximal curvature directions by computing the distribution of curvature tensor measures over the mesh and decomposing the tensor field formed by the distribution improves the preciseness (i.e., accuracy) and reliability (i.e., robustness) of the principal directions. Such an improvement is in particular significant compared to methods which exploit principal curvature direction in computing the maximal curvature directions.

A particular example of steps 110 and 120 of FIG. 1 is now discussed.

The provided segment of the outer surface may be represented by $\mathcal{M}$ where

$$\mathcal{M} = \phi(M),$$

where $M$ is a smooth manifold, and where $\phi: M \to \mathbb{R}^3$ is a continuous embedding which is not necessarily smooth. In examples,

$$\mathcal{M} = \phi(M)$$

is a polyhedral representation of the provided mesh (e.g., a skin 3D mesh). As discussed above, the method may compute the curvature tensor field based on a curvature tensor measure. For any region $S$ of $\mathcal{M}$, the curvature tensor measure

$\mathcal{K}: S \to \mathbf{K}_S$ outputs a symmetric tensor $\mathbf{K}_S$ as:

$$\mathbf{K}_S: \left| \begin{array}{l} \mathbb{R}^3 \times \mathbb{R}^3 \to \mathbb{R} \\ (U,V) \mapsto \mathbf{K}_S(U,V) \end{array} \right.$$

where U and V designate two 3D directions in $\mathbb{R}^3$ and $\mathbf{K}_S(U, V)$ is a symmetric tensor. $K_S(U, V)$ presents a way to properly define a curvature tensor. In examples, $\frac{K_S(U,U)}{|U|^2}$ gives a curvature value associated with the direction $U$. Said curvature value may not be the principal curvature value associated with the direction $U$. The method may then diagonalize (i.e., decompose) the symmetric tensor $\mathbf{K}_S$. As known per se, for a symmetric tensor as $\mathbf{K}_S$ there is a decomposition of the form:

$$\mathbf{K}_S = \lambda_1 e_1 \otimes e_1 + \lambda_2 e_2 \otimes e_2 + \lambda_3 e_3 \otimes e_3$$

with $\lambda_1, \lambda_2, \lambda_3 \in \mathbb{R}$ and $e_1$, $e_2$, $e_3$ being three orthonormal vectors in $\mathbb{R}^3$. This decomposition is often referred to as "diagonalization". The method may diagonalize a tensor according to any known method in the literature. In examples, the method may diagonalize $\mathbf{K}_S$ as the following:

$$\mathbf{K}_S = \kappa_S^m \omega_S^m \otimes \omega_S^m + \kappa_S^M \omega_S^M \otimes \omega_S^M + \sigma_S \eta_S \otimes \eta_S$$

with $\eta_S$ being the covector most aligned with $\int_{\phi^{-1}(S)} N_p dvol_{M,g}(p)$ and $\sigma_S$ being an associated eigenvalue with $\eta_S$. In such diagonalization, $\kappa_S^M \omega_S^M \otimes \omega_S^M$ is the first sub-tensor corresponding to the maximal curvature, $\kappa_S^m \omega_S^m \otimes \omega_S^m$ is the second sub-tensor corresponding to the minimal curvature, and $\sigma_S \eta_S \otimes \eta_S$ is the this sub-tensor corresponding to a perturbation term resulting from averaging of the computation of the tensor measure. The values $\kappa_S^m \in \mathbb{R}$, and $\kappa_S^M \in \mathbb{R}$ are the minimum and maximum curvature values in the absolute value sense (i.e., $|\kappa_S^m| \leq |\kappa_S^M|$), respectively. Furthermore, $(\omega_S^m, \omega_S^M) \in (T_p M^*)^2$ are the covectors associated to the principal curvature directions. In examples, the computing of the distribution of maximal curvature directions may be based on the decomposed tensor $X_S^M = (\omega_S^M)^\#$ as the computed maximal curvature direction. Such a computing may comprise projecting the computed maximal curvature direction $X_S^M$ on the tangent plane defined by each face of the mesh.

In examples, the distribution of maximal curvature direction may comprise one or more respective maximal curvature directions for each face. The tracing of each integral curve may comprise, starting from a respective seed point (of the plurality of seed points belonging to the mesh), iteratively face-by-face, integrating a planar curve on each respective face based on the one or more respective maximal curvature directions. As known per se, by an "integral curve" it is meant is a parametric curve that represents a specific solution to an ordinary differential equation or system of equations. For such integral curves, if the differential equation is represented as a vector field or slope field (e.g., maximal directions of a (curvature tensor) field), then the corresponding integral curves are tangent to the field at each point. In such examples, the integral curves may comprise a direction according to a direction defined by said field. More specifically, an integral curve of a vector field is a parametric curve which speed is equal to the vector field at each point of the curve. Each iteration (i.e., each face-by-face iteration) may stop once the integrating reaches an edge of the respective face. In other words, the method may compute for a respective face, starting from a respective seed point residing inside (i.e., on) said respective face an integral curve until said integral curve reaches a boundary of said face defined by an edge of said face.

In examples, the one or more maximal curvature directions of each respective face may consist of a single maximal curvature direction which is constant for the face of the mesh. In such examples, the integrating of each planar curve on a respective face is based on said constant maximal curvature direction, the planar curve thereby is a straight line. In such examples, the determined curves over the mesh (that each follows maximal curvature directions of the mesh) may be of form of polylines composed of a plurality of straight lines over respective faces. Examples of such polylines are presented in FIG.s 3A and 3B, where 310 and 320 represent such polylines. In such examples, each polyline may be defined by a plurality of points in $\mathbb{R}^3$.

Back to FIG. 1, and as discussed above, in step 130, the method may fit each curve with a respective circle.

By "fitting a curve with a circle" it is meant finding a circle which is closest to the curve. The respective fitted circle may be closest to the curve in some distance defined between said circle and said curve. Such a distance may be a cumulative distance defined between a plurality of points on said curve and on said curve. Thus, fitting each curve with a circle may comprise solving an optimization problem which tends to minimize said distance. The minimum distance between the fitted circle and the curve (i.e., upon solving the optimization problem) forms a fitting error of the fitted circle. In examples, such a fitting may comprise determining a plane closest to the curve with respect to a least square distance, and projecting the curve on the plane. In other words, the method may project each determined 3D curve into a 2D plane. The method may determine such a 2D plane by optimizing (e.g., minimizing) a distance (e.g., in the least square sense) between the curve and a candidate plane. In examples where the curve is a polyline such an optimization may minimize a sum of a distance between a candidate plane and each of the plurality of points defining the polyline. Such a plane may be equivalently referred to as average plane. The optimization may comprise forming a covariance matrix representing spread of each curve in 2D/3D space, and computing eigenvalues/eigenvectors of said matrix. The fitting may further comprise determining a circle closest to the projected curve with respect to a predetermined distance. In other words, the method fits each curve with a respective circle and obtaining a set of circles.

In step 140 of FIG. 1, the method fits each curve (i.e., each of the determined curves) with a respective circle. In examples, the method fits each curve with a respective circle by determining a respective radius and a respective centre for said circle. The method may fit of each curve with a circle (e.g., by determining the respective radius and centre as discussed) with any known methods in the art, e.g., any curve fitting method.

Then, at step 150, the method may calculate a value of one or more statistics of the set of circles. By "one or more statistics of the set of circles" it is meant a plurality of statistical (i.e., numerical) measures on the set of circles to summarize respective data incorporated in the set. Said measures may be in particular any quantitative measure known in the field. The method may further obtain such measures by a statistical analysis of the circles in the set, for example using histogram, curve fitting and/or any other known statistical analysis. In examples, the one or more statistics comprise one or both of a mean fitting error, and a radius variance. The mean fitting error designates a mean (i.e., an average) of a fitting error over the set of circles. The fitting error for each circle of the set represents the distance between the fitted circle and the respective curve as discussed above. The radius variance represents variety of radii in the set for the fitted circles. The radius variance may represent how said radii are distributed, for example around an average or a median value of said radii. As a fillet feature forms a surface with a constant maximal curvature (i.e., radius), such a variance represents an error in the obtained radius for the fillet as discussed below.

In examples where the one or more statistics comprises a mean fitting error, the mesh may be detected as a fillet if, and only if, the mean fitting error is below a first threshold. The first threshold, may have a value close to the expected noise level (e.g., expected inaccuracy) of the provided mesh. Such a threshold enables the method to take into account approximation originating from the discrete nature of the mesh. In examples, a value of the first threshold may be in the range of $[0.0001B, 0.002B]$ for meshes with low level of noise to the range of $[0.002B, 0.01B]$ for the meshes with high level of noise, where $B$ is the radius of the bounding sphere of the mesh. In such examples, the method may compute a mean fitting error for the determined curves and respective fitted circles, i.e., an average fitting error for the determined curves and the respective fitted circles. Such a mean fitting error may represent how far the determined curves are far from the respective fitted curves according to an error measure. The error measure, for each curve when the curve is a polyline, may be a sum of distances between a projection of each point of the plurality of points defining the polyline as discussed above, and a respective point on the fitted curve. For example, the method may use a distance measure of the type:

$$\epsilon_i^2 = \frac{1}{M_i} \sum_{j=1}^{M_i} \left( |p_j - c_i| - r_i \right)^2$$

where $\epsilon_i$ is the distance measure for the determined curve (i.e., polyline) i, and $\left(p_1, \cdots, p_{M_i}\right) \in \left(\mathbb{R}^2\right)^{M_i}$ are the projections of the plurality of points, i.e., $\left(x_1, \cdots, x_{M_i}\right) \in \left(\mathbb{R}^3\right)^{M_i}$ which defines the polyline *i*. In other words, $p_j = \mathbf{P}x_i$ where $\mathbf{P}$ is said projection. Furthermore, $r_i$ and $c_i$ are the respective radius and the respective centre for the circle. In such examples, the mean fitting error may be of the type:

$$\overline{\epsilon^2} = \frac{1}{K} \sum_{i=1}^{K} \epsilon_i^2$$

where K is the number of determined curves (i.e., the number of respective fitted circles) and the method may compute each $\varepsilon_i$ using the distance measure as discussed above.

In examples where the one or more statistics comprises a radius variance, the mesh may be detected as a fillet if, and only if, when the radius variance is below a second threshold. In examples, the method may determine a value for the second threshold based on an average of the determined radii for the fitted circles as discussed above. The second threshold may be a square of said average multiplied by a coefficient, preferably in the range of [0.01,0.25]. The method may compute the radius variance as a mathematical variance as known *per se* in statistics on the determined radii of the fitted circles. In particular, the radius variance may of the type:

$$(\delta r)^2 = \frac{1}{(K-1)} \sum_{i=1}^{K} (r_i - \bar{r})^2,$$

where $(\delta r)^2$ is the radius variance, $K$ is the number of determined curves (i.e., the number of respective fitted circles), and $\bar{r}$ is an average of the determined radii. In such examples, the second threshold may of the type $(\eta_2 \bar{r})^2$ where $\eta_2$ is the coefficient as discussed above.

In examples, as in step 160 of FIG. 1, the method may further comprise parametrization of a determined fillet in the provided mesh. By "parametrization of a feature" it is meant obtaining one or more parameters which are able to completely define said feature. For example, a fillet in 3D may be a cylindrical fillet and be completely defined by an axis of the fillet (corresponding to an axis for a cylinder) and a radius of a cylindrical curvature of the fillet. Alternatively, a fillet in 3D may be a spherical fillet and be completely defined by a center of the fillet (corresponding to a center for a sphere) and a radius of spherical curvature of the fillet. Such a parametrization is 2D reduces to a center and a circle radius of the fillet. In such examples, the method may further calculate an average radius of the set of circles, and when a fillet is detected, creates a fillet CAD feature parameterized by the average radius.

The fillet detection method as discussed above may be part of a detection process which applies the fillet detection method to a partition of a first mesh. Such a first mesh may include the provided mesh. Such a detection process may comprise providing (i.e., obtaining) a first mesh representing an outer surface of a mechanical part. Such a first mesh may be obtained according to the any known method in the art and in particular in the same way as the mesh is provided to the fillet detection method as discussed above. The detection process then segments the first mesh into a set of second meshes. The detection process may segment the first mesh according to any segmentation method known in the art. The process then applies the fillet detection method as discussed above to at least some second meshes of the set resulting from the segmentation. By "applying the fillet detection method to one or more meshes of the second set" it is meant that the detection process may provide (i.e., input) the one more or more meshes of the second set to the fillet detection method. The detection process may apply the fillet detection method to the at least some second meshes of the set by calling the fillet detection method sequentially with one mesh of the second mesh after another. Alternatively, the fillet detection method may apply the fillet detection method to all of said some second meshes in parallel and at once. The fillet detection process as discussed above constitutes an improved method for detecting fillet in a large and complicated geometry as, in the detection process, the fillet detection method is only applied to a segment of the large mesh obtained upon a segmentation. This improves the accuracy and the computational cost of the fillet detection method. Furthermore, this enables applying the fillet detection method merely to merely a part of the first mesh (i.e., a second mesh) which may be a part of interest for a particular application.

The providing of a first mesh may comprise obtaining the first mesh from a scan of the mechanical part as discussed above. The scan may be a scan of a real-world version of the mechanical part, for example a version which has been manufactured according to any suitable manufacturing method. The scan of the mechanical part may be a scan obtained via a 3D scan process as discussed above. Alternatively, the providing of a first mesh may comprise obtaining of the first mesh from a CAD design, for example a CAD design without feature history of a CAD design with a feature history which in inaccessible (e.g., due to different version of a CAD software, a CAD design which is provided by a different CAD software, or a CAD design which does not provide public access to the feature history).

In other words, the fillet detection process may comprise providing a first mesh representing an outer surface of a mechanical part and segmenting the first mesh into a set of second meshes. The detection process may further comprise, for one or more second meshes, determining curves over the second mesh that each follows maximal curvature directions of the second mesh, and fitting each curve with a respective circle, thereby obtaining a set of circles. The detection process may then calculate a value of one or more statistics of the set of circles, and detect whether the second mesh is a fillet or not as a function of the value of the one or more statistics.

In examples, the detection process may further comprise, when the method detects that a second mesh is a fillet, identifying adjacent faces input of the fillet. Such an adjacency identification enables the method to distinguish between fillets and other surfaces with constant maximal curvature. In such examples, the method may assert that a candidate segment (i.e., a second mesh) is tangent to at least two adjacent other segments. To check if two adjacent segments are tangent, the method may check the set of edges they have in common, and compute corresponding dihedral angles. The method then may determine that said candidate segment is tangent to at least two adjacent other segments if the largest dihedral angle (in absolute value) is larger than an adjacency threshold. The adjacency threshold may be in the range of $]0, \pi/4]$. The higher the adjacency threshold set by the method is chosen, the more the tangency condition is permissive.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined. For example, the fillet detection method as discussed above may, upon providing a mesh or providing an access to a mesh or a respective CAD model (e.g., via providing a link to a server or a database) by a user, automatically execute the steps of the method, outputs a result for filet detection, some obtained parameters regarding a detected fillet, and/or adding the detected and parametrized fillet into a feature-tree. Similarly, the fillet detection process may merely receive a first mesh as of the fillet detection method upon an action by a user and automatically segments the mesh and applies the fillet detection methods on a set of obtained segments.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g., one for the program, and possibly one for the database).

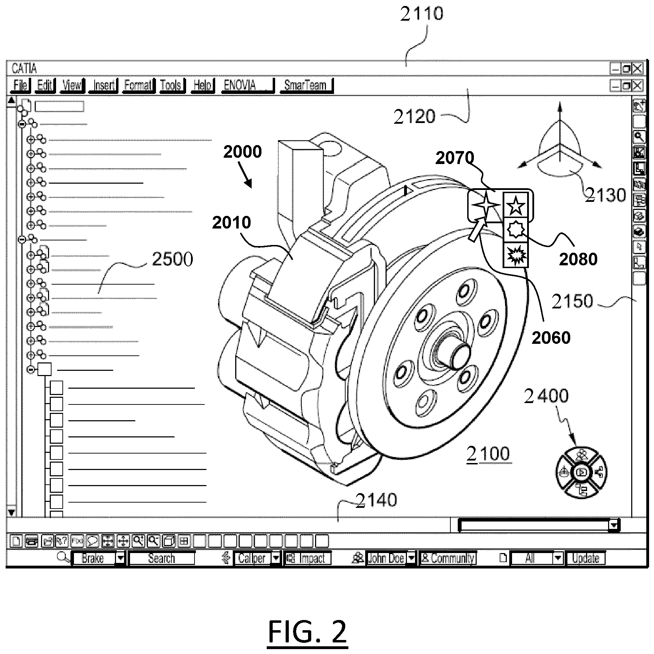

FIG. 2 shows an example of the GUI of the system, wherein the system is a CAD system. The GUI 2100 may be a typical CAD-like interface, having standard menu bars 2110, 2120, as well as bottom and side toolbars 2140, 2150. Such menu- and toolbars contain a set of user-selectable icons, each icon being associated with one or more operations or functions, as known in the art. Some of these icons are associated with software tools, adapted for editing and/or working on the 3D modeled object 2000 displayed in the GUI 2100. The software tools may be grouped into workbenches. Each workbench comprises a subset of software tools. In particular, one of the workbenches is an edition workbench, suitable for editing geometrical features of the modeled product 2000. In operation, a designer may for example pre-select a part of the object 2000 and then initiate an operation (e.g., change the dimension, colour, etc.) or edit geometrical constraints by selecting an appropriate icon. For example, typical CAD operations are the modeling of the punching, or the folding of the 3D modeled object displayed on the screen. The GUI may for example display data 2500 related to the displayed product 2000. In the example of the figure, the data 2500, displayed as a "feature tree", and their 3D representation 2000 pertain to a brake assembly including brake caliper and disc. The GUI may further show various types of graphic tools 2130, 2070, 2080 for example for facilitating 3D orientation of the object, for triggering a simulation of an operation of an edited product or render various attributes of the displayed product 2000. A cursor 2060 may be controlled by a haptic device to allow the user to interact with the graphic tools.

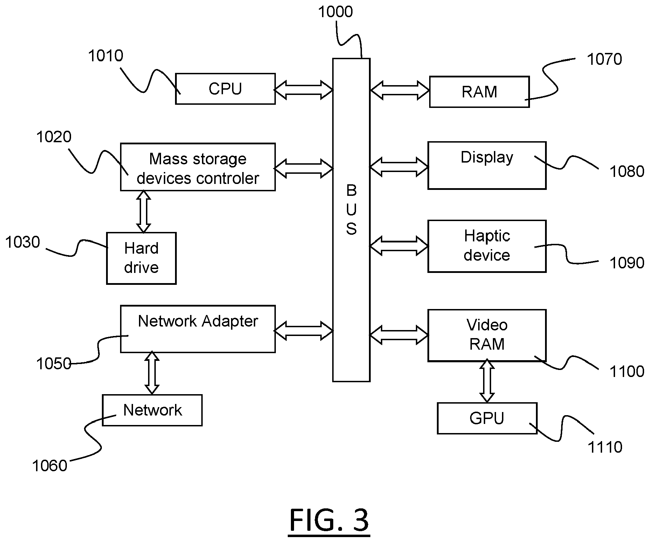

FIG. 3 shows an example of the system, wherein the system is a client computer system, e.g., a workstation of a user.

The client computer of the example comprises a central processing unit (CPU) 1010 connected to an internal communication BUS 1000, a random-access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively, or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

Implementations of the method (fillet detection part) are now discussed.

The implementations belong to the field of geometry processing and its application to fields of 3D CAD analysis, modeling and editing, 3D reconstruction and recognition, simulation and Design of Experiment.

The implementations, given a 3D surface as a mesh, identify if said given 3D surface can be produced by a fillet operator and in that case compute the radius of the fillet operator. The implementations may obtain the given 3D surface as a subpart of a segmented mesh, for example as a mesh representing a segment of an outer surface of a portion of a mechanical part.

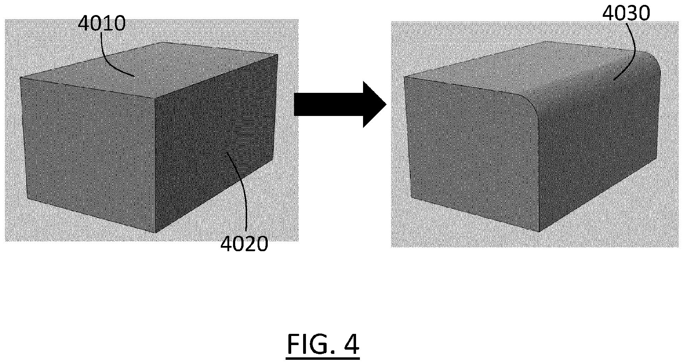

FIG. 4 presents an example of a fillet operator. A fillet operator on a 3D CAD model consists in the rounding of an edge between two adjoint faces, obtained by taking the envelope of a ball rolling along this edge with tangent support on both of those surfaces. In FIG. 4, the two adjacent faces are 4010 and 4020 while the rounded edge is 4030.

The implementations then compute curvature tensors on the given surface and extract the principal curvature direction associated with the largest principal curvature value (i.e., an absolute value). The implementations use this extracted direction field to draw a number of geodesic curves on the mesh, passing through random points on the surface. The implementations project the curves in 2D and fit circles on them. If the fitting error is low enough and the different radii of the circles are close enough, the implementations identify the given surface as a potential fillet, and obtain an associated radius (of the fillet) equal to a mean of the computed radii.

The implementations are more robust than known methods of the prior art for fillet detection. Those prior art methods rely on curvature values which sometimes are not precise enough. In contrary, the implementations are based on principal curvature directions which tend to be far more accurate. Furthermore, the computed radius for a fillet surface according to the implementations is more precise than with previous methods. The implementations require only two simple hyper-parameters, instead of a complex statistical analysis directly on the distribution of curvatures, thereby being easier to fine tune.

Details of such implementations are now discussed.

If M is a smooth manifold, and p is a point on the smooth manifold, then $T_pM$ is the tangent space to M at p, and $T_pM^*$ is the cotangent space to M at p. The notation $\Gamma(TM)$ represents the space of smooth tangent vector fields on M.

Furthermore, if $g(.,.)$ is a metric tensor field on $M$, and $X_p \in T_pM$, then

$$X_p^\flat \in$$

$$T_pM^*$$

is the associated tangent covector with respect to $g$, i.e.:

$$\forall Y_p \in T_pM, \quad X_p^\flat(Y_p) = g(X_p, Y_p).$$

Conversely, if $\omega_p \in T_pM^*$ then $\omega_p^{\#} \in T_pM$ is the associated tangent vector with respect to $g$, *i. e.*:

$$\forall v_p \in T_pM^*, \quad v_p\left(\omega_p^{\#}\right) = g^{-1}\left(v_p, \omega_p\right).$$

Considering the manifold M to be a smooth 2-manifold, and $\phi: M \to \mathbb{R}^3$ be a continuous embedding (which is not necessarily smooth), the manifold M may be seen as an abstract surface, while

$$\mathcal{M} = \phi(M)$$

is the object the implementations have access to (i.e., the surface provided to the implementations).

*Curvature Directions*

When $\phi$ is smooth, it induces a metric tensor field $g$ on $M: g(.,.) = \phi_*\langle.,.\rangle_{\mathbb{R}^3}$ i.e.:

$$\forall(X, Y) \in \Gamma(TM)^2, \quad g(X, Y) = d\phi(X) \cdot d\phi(Y).$$

Then, the implementations are able to build from $\phi$ the Gauss map $N: M \to \mathbb{S}^2 \subset \mathbb{R}^3$ as the following way: For $p \in M$, choose two tangent vectors $X_p$, $Y_p \in T_pM$ that are not collinear, then:

$$N(p) = \frac{d\phi\left(X_p\right) \times d\phi\left(Y_p\right)}{\left|d\phi\left(X_p\right) \times d\phi\left(Y_p\right)\right|}.$$

Such a Gauss map does not depend on the choice of $X_p$ and $Y_p$. The implementations then define the curvature tensor on M at a point p as:

$$\mathbf{K}_p: \left| \begin{array}{ccc} T_pM \times T_pM & \longrightarrow & \mathbb{R} \\ \left(X_p, Y_p\right) & \longmapsto & dN\left(X_p\right) \cdot d\phi\left(Y_p\right) \end{array} \right.$$

The implementations may decompose the curvature tensor $\mathbf{K}_p$ as the following:

$$\mathbf{K}_p = \kappa_p^m \omega_p^m \otimes \omega_p^m + \kappa_p^m \omega_p^M \otimes \omega_p^M$$

where $\left(\kappa_m, \kappa_M\right) \in \mathbb{R}^2$ are the (pair of) minimum and maximum curvature values in the absolute value sense, i.e., $|\kappa_m| \leq |\kappa_M|$, and $\left(\omega_p^m, \omega_p^M\right) \in \left(T_pM^*\right)^2$ are the covectors associated to the principal curvature directions, satisfying:

$$g^{-1}\left(\omega_p^m, \omega_p^m\right) = 1, \quad g^{-1}\left(\omega_p^M, \omega_p^M\right) = 1, \quad g^{-1}\left(\omega_p^m, \omega_p^M\right) = 0.$$

$X_p^M = \left(\omega_p^m\right)^{\#}$ is "Maximal direction of curvature". Note that if $|\kappa_m| < |\kappa_M|$, it is uniquely defined up to a sign.

In general, the embedding $\phi$ is not necessarily smooth, for example, the $\mathcal{M} = \phi(M)$ may be a polyhedral representation of the surface given by a mesh. In such cases, the implementations define a Gauss map $N$ (almost everywhere in the case of a triangle mesh). In such cases, the implementations, instead of a curvature tensor and its maximal direction of curvature as discussed above, compute curvature tensor measures $\mathcal{K}: S \rightarrow \mathbf{K}_S$ that, for any region $S$ of $\mathcal{M}$ outputs a symmetric tensor $\mathbf{K}_S$ as

$$\mathbf{K}_S: \left| \begin{array}{ccc} \mathbb{R}^3 \times \mathbb{R}^3 & \longrightarrow & \mathbb{R} \\ (U, V) & \longmapsto & \mathbf{K}_S(U, V) \end{array} \right. .$$

The implementations may define such a curvature tensor measure and compute them on a mesh according to any known methods, for example, as described in the article by Cohen-Steiner, David, and Jean-Marie Morvan, "Restricted Delaunay triangulations and normal cycle." In Proceedings of the nineteenth annual symposium on Computational geometry, pp. 312-321. 2003, which is incorporated here by reference.

In the smooth case (i.e., when the embedding is smooth), the implementations may interpret the symmetric tensor $\mathbf{K}_S$ by some kind of average of the (classical) curvature tensor $\mathbf{K}_p$ over the region S as:

$$\mathbf{K}_S(U, V) = \frac{1}{vol(S)} \int_{\phi^{-1}(S)} K_p \left( \theta_p(U), \theta_p(V) \right) dvol_{M,g}(p)$$

where $\theta_p(U) = argmin_{X \in T_pM} |d\phi(X) - U|^2$ and the expression $\theta_p(V)$ is similarly defined. The implementations may diagonalize $\mathbf{K}_S$ as:

$$\mathbf{K}_S = \kappa_S^m \omega_S^m \otimes \omega_S^m + \kappa_S^M \omega_S^M \otimes \omega_S^M + \sigma_S \eta_S \otimes \eta_S$$

with $\eta_S$ being the covector most aligned with $\int_{\phi^{-1}(S)} N_p dvol_{M,g}(p)$ and $\sigma_S$ being a computed eigenvalue of $\mathbf{K}_S$ associated with $\eta_S$. By "being most aligned", it is meant that upon the diagonalization of $\mathbf{K}_S$ by the method as discussed above, the method sets he covector $\eta_S$ to be the covector (among three covectors) which is most aligned with the specified vector obtained by the integral $\int_{\phi^{-1}(S)} N_p dvol_{M,g}(p)$. The method may compute an alignment error for each of covectors and set the covector with the minimum error as the most aligned covector.

In the case of a triangle mesh, in order to simplify computations, the implementations assume that the maximal curvature direction is constant on each face $\tau$ of the mesh, thus only compute one curvature tensor $\mathbf{K}_S$ per face $\tau$, with $S =$

$$B(p, r) \cap \mathcal{M},$$

$p$ being the barycentre of the face and $r > 0$, (with values of $r$ between 3 and 5 times the average size of the faces of the mesh). The implementations then project the computed maximal curvature direction $X_S^M = (\omega_S^M)^{\#}$ on the tangent plane defined by $\tau$. This way of computing curvature tensors makes the principal directions very reliable and precise even on noisy meshes.

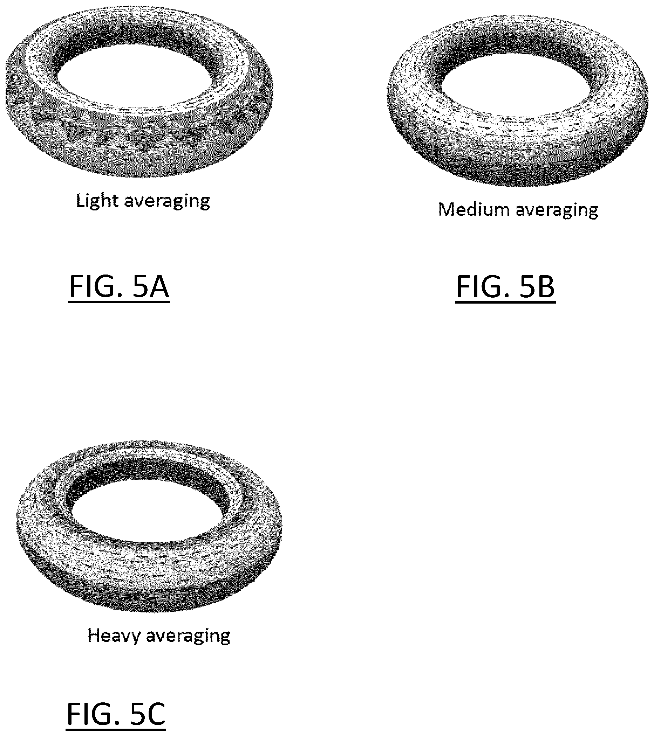

FIG.s 5A-C present noisy results of curvature evaluation which affect significantly the known fillet detection methods in the art based on these evaluations. The minimal curvature values of computed curvature tensors on a mesh of a torus are presented by colours on the faces of the mesh on FIG.s 5A-C for three levels of averaging: FIG. 5A displays the result for a light averaging, FIG. 5B for a medium averaging, and Fig. 5C for a heavy averaging. The level of averaging may be defined based on a region of averaging according to the number of the neighbours of a face whose values are used in the computation of an average representing the averaged value for said face. Alternatively, the level of averaging may be defined based on a radius of a ball and its corresponding intersection region with the surface mesh. The higher the level of an averaging, the more (and the farther) neighbours of a face are used in the averaging (or the larger the radius of said ball is). The results presented in FIG.s 5A-C show the minimal curvature values computed according to the already cited article by Cohen-Steiner, and Morvan. "Restricted Delaunay triangulations and normal cycle." which provides curvature tensor fields that are constant by face. The results show that the minimal curvature values strongly depend on the level of averaging. The medium level of averaging as in FIG. 5B produces the most accurate results in this example. When the averaging is too light as in FIG. 5A the computed curvature values tend to show noisy results with extreme values, and when the averaging is too heavy as in FIG. 5C, the computed curvature values are invalidly homogeneous in some regions and/or obtain out of validity range values in some other regions. The provided results show that the computation of the curvature values is not robust choice of parameters for the averaging. The choice of the right level of averaging is not a trivial task, as it depends on the mesh and may differ for different locations on a same mesh. Furthermore, such averaging techniques need to be followed by a post-processing to balance the averaging effect that tends to flatten the curvature distribution. Additionally, the obtained curvature values are generally quite far from the theoretical expectations (i.e., exact values for a smooth surface approximated by the mesh).

FIG.s 5A-C further show the minimal curvature directions, which are represented by black arrows. In contrast to computed curvatures, the minimal curvature directions are significantly consistent across the levels of averaging, and they are very accurate for the three cases. There is no existing method capable of computing curvature values with the accuracy and the robustness comparable for curvature directions in the state of the art.

*Seed Points*

The implementations distribute the seed points over the surface, i.e., in a homogenous way. For such distributions the implementations may oversample random points on the surface with uniform distribution, and then use Iterative Farthest Sampling (as known in the art) to get an evenly distributed subset $(q_1, \cdots, q_K)$.

*Curve Tracing*

The implementations build the curves $\alpha_i: I_i \to M$ defined by:

$$\begin{cases} \dot{\alpha}_i(t) = \zeta_i(t) X^M_{\alpha_i(t)} & \forall t \in I_i \\ \alpha_i(0) = q_i \end{cases}$$

where $I_i$ is the interval of the maximum solution of this equation (the largest one), and by considering their embedding in $\mathbb{R}^3$ as $\gamma_i = \phi \circ \alpha_i$. Furthermore, $\zeta_i(t) \in \{-1,1\}$ is set by the implementations such that $t \mapsto \dot{\alpha}_i(t)$ is smooth and to avoid U-turns for the curves. The vector field $X^M$ resulting from the computation of the maximal curvature direction according is not necessarily consistently oriented and for any point p on the surface, the maximal curvature direction at p can be either represented by $X^M_p$ or $-X^M_p$. By multiplying by $\zeta_i$, the implementations ensure a correction of the (direction of the) vector field $X^M_p$ such that the orientation stays consistent along each curve.

The implementation may integrate the above equation with classical numerical methods. Specifically, on a triangle mesh with $X^M$ being constant per face, the curve $\gamma_i$ is defined by segments of straight lines on some faces. In this method, the implementation, for each face $\tau$ of the mesh, the implementation may compute a finite sequence of points on edges of the mesh, by, at each step, intersecting the edges of the face $\tau$ with the ray defined by the vector $X^M_\tau$. Then the curve $\gamma_i$ takes the form of a polyline defined by $M_i$ points $\left(x_1, \cdots, x_{M_i}\right) \in \left(\mathbb{R}^3\right)^{M_i}$.

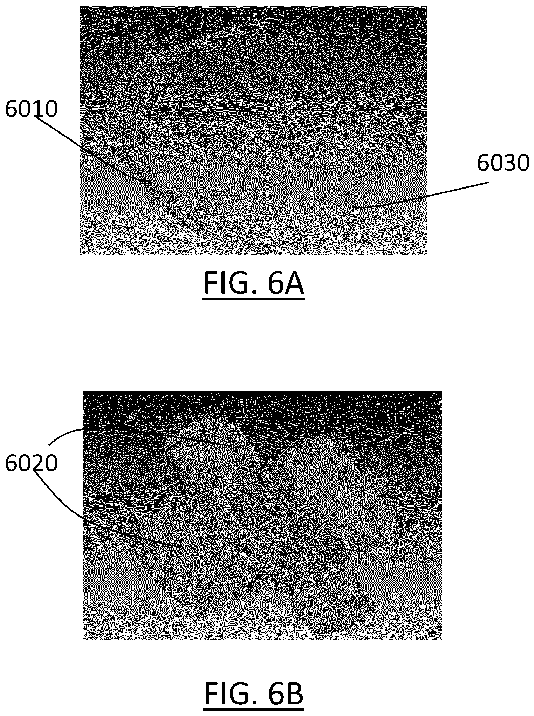

FIG.s 6A and 6B present examples of computes curves 6010 and 6020. The provided mesh 6030 in FIG. 6A is a triangular mesh.

*Projection*

For each curve $\gamma_i$, the implementations compute the following covariance matrix:

$$\mathbf{C}_i = \frac{1}{|I|} \int_I (\gamma_i(t) - \bar{\gamma}_i)(\gamma_i(t) - \bar{\gamma}_i)^T \, dt$$

where:

$$\bar{\gamma}_i = \frac{1}{|I|} \int_I \gamma_i(t) \, dt.$$

Then, the implementations compute the eigenvalues $(\lambda_i^1 \leq \lambda_i^2 \leq \lambda_i^3)$ and eigenvectors $(u_i^1, u_i^2, u_i^3)$ of $\mathbf{C}_i$ as:

$$\mathbf{C}_i u_i^j = \lambda_i^j u_i^j.$$

The implementations then use the computed eigenvectors to define the matrix:

$$\mathbf{P} = \begin{pmatrix} (u_i^2)^T \\ (u_i^3)^T \end{pmatrix}.$$

Then, the implementations may compute the 2D approximation ("projected curve") of $\gamma_i$ as $\tilde{\gamma}_i = \mathbf{P}\gamma_i$, and $\mathbf{P}$ represents the average plane that fits the curve $\gamma_i$.

In the case where the surface is a triangle mesh, $\tilde{\gamma}_i$ is a 2D polyline, and is defined by $(p_1, \cdots, p_{M_i}) \in (\mathbb{R}^2)^{M_i}$, where $p_j = \mathbf{P}x_j$.

*Circle Fitting*

For each projected curve $\tilde{\gamma}_i$, the implementations seek to find the centre $c_i \in \mathbb{R}^2$ and the radius $r_i > 0$ of the circle arc that best fits the curve. The implementations take regularly spaced points on the projected curve, then use circle fitting methods (according to any known fitting method) on 2D point clouds. The implementations may use the circle fitting method as described in the article by Coope, Ian D. "Circle fitting by linear and nonlinear least squares." Journal of Optimization theory and applications 76, no. 2 (1993): 381-388, which is incorporated here by reference.
The implementations then compute a fitting error $\varepsilon_i$ depending on the fitting method. For instance, the fitting error may be computed as $\epsilon_i^2 = \frac{1}{M_i} \sum_{j=1}^{M_i} \left( |p_j - c_i| - r_i \right)^2$ for a polyline $\tilde{\gamma}$ is a polyline with the points $(p_1, \cdots, p_{M_i})$. The method may additionally or alternatively use other fitting errors.

*Decision*

The implementations may make a decision on fillet detection by taking into account to indicators as

- a mean fitting error defined as $\overline{\epsilon^2} = \frac{1}{K} \sum_{i=1}^{K} \epsilon_i^2$, and

- a radius variance defined as $(\delta r)^2 = \frac{1}{(K-1)} \sum_{i=1}^{K} (r_i - \bar{r})^2$.

In some variants, the implementations may use the same variance as defined above but by replacing $r_i$ (resp $\bar{r}$, $(\delta r)^2$) by $l_i = \log(r_i)$ (resp $\bar{l}$, $(\delta l)^2$) in the formulas above. Such variants of the implementations make are invariant to the scale of the model, because they compare the radii using ratios instead of differences.

Finally, the implementations identify M as a fillet surface if

$$\bar{\epsilon} \le \eta_1 \quad and \quad (\delta r)^2 \le (\eta_2\,\bar{r})^2$$

with radius $r^* = \bar{r}$ (or $r^* = \exp(\bar{l})$).

The threshold $\eta_1$ may have a value close to the expected noise level of the mesh, taking into account the approximation that comes from the discrete nature of the mesh. In general, the implementations may set a value for $\eta_1$ in the range of $[0.0001B, 0.002B]$ where $B$ is the radius of the bounding sphere of the provided mesh for rather clean meshes and in the range of $[0.002B, 0.01B]$ for noisy meshes. The higher the noise in the mesh, the implementations may set a larger value for the threshold $\eta_1$. The threshold $\eta_2$ may have a value in the range of $[0.01, 0.25]$.

*Adjacency condition*

Being provided with a segmented mesh, the implementations may consider a supplementary condition to distinguish the fillets and other surfaces with constant maximal curvature is by asserting that the candidate segment is tangent to at least 2 adjacent other segments.

To check if two adjacent segments are tangent, the implementations may check the set of edges $(e_j)_{j \in J}$ the two segments have in common and compute the corresponding dihedral angles $(\theta_j)_{j \in J}$. Then the implementations may set the condition as:

$$\max_{j \in J}\left|\theta_j\right| \le \theta_{th}$$

with $\theta_{th}$ (i.e., the adjacency threshold) taken in $]0, \pi/4]$ for instance. The higher $\theta_{th}$ is set by the implementations, the more this tangency condition is permissive, and the implementations detect as fillets some surfaces that are not exactly tangent to their neighbours. Such misdetections may be acceptable in particular if the mesh is noisy or very approximate.

FIG.s 7A-B display a result of application of the method on a provided mesh of the mechanical parts 7010 and 7020, respectively. Furthermore, the darker faces 7030 and 7040 show the detected fillets.

## Claims

1.  A computer-implemented method comprising:

    - providing a mesh representing a segment of an outer surface of a portion of a mechanical part;
    - determining curves over the mesh that each follows maximal curvature directions of the mesh;
    - fitting each curve with a respective circle, thereby obtaining a set of circles;
    - calculating a value of one or more statistics of the set of circles; and
    - detecting whether the mesh is a fillet or not as a function of the value of the one or more statistics.

2.  The method of claim 1, wherein the determining of the curves comprises:

    - computing a distribution of maximal curvature directions over the mesh; and
    - starting from a plurality of seed points belonging to the mesh, tracing integral curves of the distribution of maximal curvature directions.

3.  The method of claim 2, wherein the computing of a distribution of maximal curvature directions comprises:

    - computing a curvature tensor field ($\mathbf{K}_S$) distributed over the mesh;

    - decomposing the computed tensor field ($\mathbf{K}_S$) into at least two sub-tensors, a first sub-tensor $\left(\kappa_S^M \omega_S^M \otimes \omega_S^M\right)$ corresponding to a maximal curvature, and a second sub-tensor $\left(\kappa_S^m \omega_S^m \otimes \omega_S^m\right)$ corresponding to a minimal curvature; and

- computing the distribution of maximal curvature directions based on the decomposed tensor field $(X_S^M = (\omega_S^M)^{\#})$.

4. The method of claim 3, wherein the computing of the curvature tensor field is performed according to a normal cycles approach, a quadric fitting approach, or a circle fitting approach.

5. The method of any one of claims 2 to 4, wherein the mesh has faces and edges, the distribution of maximal curvature directions comprising, for each face, one or more respective maximal curvature directions, the tracing of each integral curve comprising, starting from a respective seed point, iteratively face-by-face, integrating a planar curve on each respective face based on the one or more respective maximal curvature directions, each iteration stopping once the integrating reaches an edge of the respective face.

6. The method of claim 5, wherein the one or more maximal curvature directions of each respective face consist of a single maximal curvature direction which is constant for the face, the integrating of each planar curve on a respective face being based on said constant maximal curvature direction, the planar curve thereby being a straight line.

7. The method of any one of claims 1 to 6, wherein the one or more statistics comprise one or both of:

- a mean fitting error, the mesh being detected as a fillet if, and only if, the mean fitting error is below a first threshold, and
- a radius variance, the mesh being detected as a fillet if, and only if, when the radius variance is below a second threshold.

8. The method of any one of claims 1 to 7, wherein the fitting of each curve with a respective circle comprises:

- determining a plane closest to the curve with respect to a least square distance;
- projecting the curve on the plane; and
- determining a circle closest to the projected curve with respect to a predetermined distance.

9. The method of any one of claim 1 to 8, wherein the method further comprises:

- calculating an average radius of the set of circles; and
- when a fillet is detected, creating a fillet CAD feature parameterized by the average radius.

10. The method of any one of claim 1 to 9, wherein the method comprises:

- providing a first mesh representing an outer surface of a mechanical part;
- segmenting the first mesh into a set of second meshes; and
- for one or more second meshes

-- determining curves over the second mesh that each follows maximal curvature directions of the second mesh;
-- fitting each curve with a respective circle, thereby obtaining a set of circles;
-- calculating a value of one or more statistics of the set of circles; and
-- detecting whether the second mesh is a fillet or not as a function of the value of the one or more statistics

11. The method of claim 10, further comprising, when the method detects that a second mesh is a fillet, identifying adjacent faces input of the fillet.

12. The method of any one of claims 10 or 11, wherein the providing of a first mesh comprises

- obtaining the first mesh from a scan of the mechanical part; or
- obtaining the first mesh from a CAD design.

13. A computer program comprising instructions for performing the method according to any one of claims 1 to 12.

14. A computer readable storage medium having recorded thereon the computer program of claim 13.

**15.** A system comprising a processor coupled to a memory, the memory having recorded thereon the computer program of claim 13.

FIG. 1

# FIG. 2

## FIG. 3

4010

4020

4030

FIG. 4

Light averaging

## FIG. 5A

Medium averaging

## FIG. 5B

Heavy averaging

## FIG. 5C

6010

6030

## FIG. 6A

6020

## FIG. 6B

7030

7010

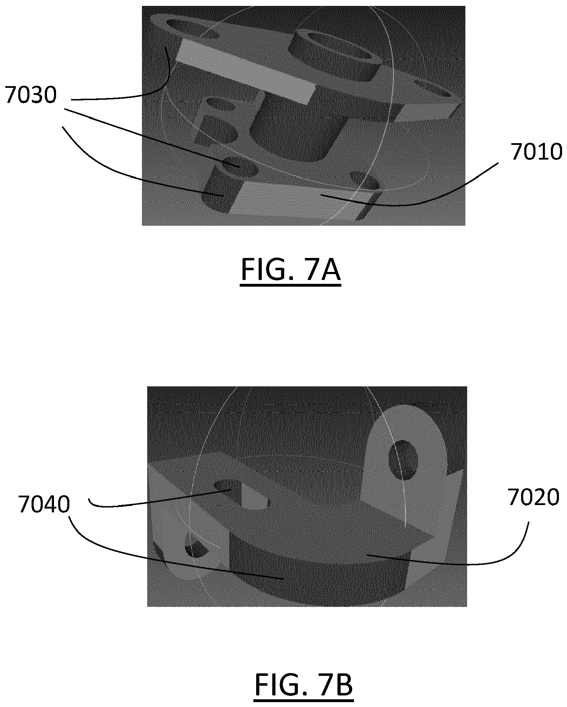

FIG. 7A

7040

7020

FIG. 7B

Europäisches
Patentamt

European
Patent Office

Office européen
des brevets

# EUROPEAN SEARCH REPORT

Application Number

EP 22 30 6451

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/203877 A1 (SIEMENS AG [DE]; SIEMENS CORP [US]) 24 October 2019 (2019-10-24) * paragraph [0048] – paragraph [0051] * * paragraph [0064] * * paragraph [0074] – paragraph [0075] * * figures 2A-7C * | 1-15 | INV. G06F30/17 G06F30/20 ADD. G06F111/04 |
| X,D | SYLVAIN PETITJEAN: "A survey of methods for recovering quadrics in triangle meshes", ACM COMPUTING SURVEYS, ACM, NEW YORK, NY, US, US, vol. 34, no. 2, 1 June 2002 (2002-06-01), pages 211-262, XP058219331, ISSN: 0360-0300, DOI: 10.1145/508352.508354 * paragraph [3.3.1] * | 1-15 | |
| X | US 8 004 517 B1 (EDELSBRUNNER HERBERT [US] ET AL) 23 August 2011 (2011-08-23) * column 6, line 8 – line 62; figures 1.5-2.1 * | 1-15 | TECHNICAL FIELDS SEARCHED (IPC) G06F |
| X | WO 2008/012640 A1 (TOYOTA MOTOR CO LTD [JP]; IKEDA EISAKU [JP]; NAKANO KAZUHITO [JP]) 31 January 2008 (2008-01-31) * paragraph [0039] – paragraph [0047]; figures 3-6C * | 1-15 | |

The present search report has been drawn up for all claims

| Place of search | Date of completion of the search | Examiner |
|---|---|---|
| Berlin | 6 February 2023 | Kirsten, Karl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6451

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2023

| Patent document cited in search report | | Publication date | Patent family member(s) | | Publication date |
|---|---|---|---|---|---|
| WO 2019203877 | A1 | 24-10-2019 | US 2021150078 A1 | | 20-05-2021 |
| | | | WO 2019203877 A1 | | 24-10-2019 |
| US 8004517 | B1 | 23-08-2011 | NONE | | |
| WO 2008012640 | A1 | 31-01-2008 | JP 4179355 B2 | | 12-11-2008 |
| | | | JP 2008033430 A | | 14-02-2008 |
| | | | WO 2008012640 A1 | | 31-01-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3327593 A

- EP 21306754

**Non-patent literature cited in the description**

- **DI ANGELO et al.** Fillets, rounds, grooves and sharp edges segmentation from 3D scanned surfaces. *Computer-Aided Design,* 2019, vol. 110, 78-91
- **COHEN-STEINER ; MORVAN.** Restricted Delaunay triangulations and normal cycle. *Proceedings of the nineteenth annual symposium on Computational geometry,* 2003, 312-321
- **LACHAUD ; ROMON ; THIBERT ; COEURJOLLY.** Interpolated corrected curvature measures for polygonal surfaces. *Computer Graphics Forum,* 2020, vol. 39 (5), 41-54
- **PETITJEAN, SYLVAIN.** A survey of methods for recovering quadrics in triangle meshes. *ACM Computing Surveys (CSUR),* 2002, vol. 34 (2), 211-262

- Estimating the tensor of curvature of a surface from a polyhedral approximation. **TAUBIN, GABRIEL.** Proceedings of IEEE International Conference on Computer Vision. IEEE, 1995, 902-907
- **COHEN-STEINER ; DAVID ; JEAN-MARIE MORVAN.** Restricted Delaunay triangulations and normal cycle. *Proceedings of the nineteenth annual symposium on Computational geometry,* 2003, 312-321
- **COOPE, IAN D.** Circle fitting by linear and nonlinear least squares. *Journal of Optimization theory and applications,* 1993, vol. 76 (2), 381-388